# EUROPÄISCHE PATENTANMELDUNG

(11) **EP 2 034 383 A2**
(43) Veröffentlichungstag der Anmeldung: **11.03.2009**
(21) Anmeldenummer: 08105219.3
(22) Anmeldetag: 03.09.2008
(51) Int. Cl.: G05G 1/10, G05G 5/03

(54) **Drehsteller**

(30) Priorität: 05.09.2007 DE 102007042113
(71) Anmelder: Continental Automotive GmbH, 30165 Hannover (DE)
(72) Erfinder: Beck, Andreas, 65620, Waldbrunn (DE); Heimberger, Hans-Dieter, 61440, Oberursel (DE); Santarossa, Bruno, 72227, Egenhausen (DE)

(57) **Zusammenfassung**

Die Erfindung bezieht sich auf einen Drehsteller für elektrische oder elektronische Geräte in einem Kraftfahrzeug mit einem gegenüber feststehenden Gehäuseteilen manuell um eine Drehachse in und entgegen dem Uhrzeigersinn drehbar antreibbaren Drehknopf 3, durch den ein Rastkonturenelement mit einer alternierend Rasterhebungen und Rastvertiefungen aufweisenden Rastkontur 11, 13 drehbar antreibbar ist, in die ein Rastelement mit federnder Vorspannung eingreift. Ein Zahnkranz 5 ist koaxial drehfest mit dem Drehknopf 3 verbunden. Eine steuerbare Klinkenanordnung, weist zwei Klinken 48, 49 auf, deren Klinken 48, 49 in die Zahnlücken des Zahnkranzes 5 schwenkbar antreibbar sind, wobei durch die eine Klinke 48 eine Drehung des Drehknopfes 3 im Uhrzeigersinn und durch die zweite Klinke 49 eine Drehung des Drehknopfes 3 entgegen dem Uhrzeigersinn blockierbar ist. Ein die beiden Klinken 48, 49 aufweisendes Klinkenelement 45 ist um eine zur Drehachse des Drehknopfes 3 parallele Schwenkachse 46 schwenkbar antreibbar, wobei die Klinken 48, 49 von der Schwenkachse 46 ausgehend sich einander annähernd gegenläufig erstrecken und wobei das Klinkenelement 45 aus einer Neutralposition, in der beide Klinken 48, 49 außer Eingriff von dem Zahnkranz 5 sind, entgegen dem Uhrzeigersinn in eine Eingriffsposition der ersten Klinke 48 in den Zahnkranz 5 und im Uhrzeigersinn in eine Eingriffsposition der zweiten Klinke 49 in den Zahnkranz 5 schwenkbar ist.

## Beschreibung

Die Erfindung bezieht sich auf einen Drehsteller für elektrische oder elektronische Geräte in einem Kraftfahrzeug mit einem gegenüber feststehenden Gehäuseteilen manuell um eine Drehachse in und entgegen dem Uhrzeigersinn drehbar antreibbaren Drehknopf, durch den ein Rastkonturenelement mit einer alternierend Rasterhebungen und Rastvertiefungen aufweisenden Rastkontur drehbar antreibbar ist, in die ein Rastelement mit federnder Vorspannung eingreift, mit einem Zahnkranz, der koaxial drehfest mit dem Drehknopf verbunden ist und mit einer zwei Klinken aufweisenden, steuerbaren Klinkenanordnung, deren Klinken in die Zahnlücken des Zahnkranzes schwenkbar antreibbar sind, wobei durch die eine Klinke eine Drehung des Drehknopfes im Uhrzeigersinn und durch die zweite Klinke eine Drehung des Drehknopfes entgegen dem Uhrzeigersinn blockierbar ist.

Durch das in die Rastkontur mit federnder Vorspannung eingreifende Rastelement erhält eine Bedienperson beim Drehen des Drehknopfes eine haptische Rückmeldung insbesondere entsprechend der Schaltschritte z.B. zur Einstellung einer Stellgröße eines Auswahlmenüs.

Wenn für die ausgewählte Stellgröße die Stellmöglichkeit am Anfang und am Ende des einstellbaren Wertebereichs begrenzt werden soll, kann dies durch die Klinken erfolgen, die dann in den Zahnkranz eingreifen und Endanschläge bilden.

Aufgabe der Erfindung ist es einen Drehsteller der eingangs genannten Art zu schaffen, der einen einfachen Aufbau und eine geringe Baugröße sowie eine variable Einstellbarkeit der Endanschläge aufweist.

Diese Aufgabe wird erfindungsgemäß dadurch gelöst, dass ein die beiden Klinken aufweisendes Klinkenelement um eine zur Drehachse des Drehknopfes parallele Schwenkachse schwenkbar antreibbar ist, wobei die Klinken von der Schwenkachse ausgehend sich einander annähernd gegenläufig erstrecken und wobei das Klinkenelement aus einer Neutralposition, in der beide Klinken außer Eingriff von dem Zahnkranz sind, entgegen dem Uhrzeigersinn in eine Eingriffsposition der ersten Klinke in den Zahnkranz und im Uhrzeigersinn in eine Eingriffsposition der zweiten Klinke in den Zahnkranz schwenkbar ist.

Durch die einteilige Ausbildung beider Klinken ist nur ein einziges Bauteil zum Bilden der Endanschläge für beide Drehrichtungen erforderlich, wodurch die benötigte Baugröße gering gehalten werden kann.

Die Klinken werden in ihre Eingriffsposition geschwenkt und damit eine weitere Drehung des Drehknopfes blockiert, wenn das vorbestimmte Ende des Wertebereichs erreicht wird.

Eine einfache Bedienbarkeit wird dadurch erreich, dass die Klinkenanordnung einen Sperrklinkenantrieb zum Antrieb des Klinkenelements aufweist, der von einer elektrischen oder elektronischen Steuereinheit ansteuerbar ist, wobei der Sperrklinkenantrieb vorzugsweise reversibel ist.

Da nur ein einziger Sperrklinkenantrieb benötigt wird, reduziert sich die Baugröße.

Ein Antrieb des Klinkenelements erfolgt bei Erreichen eines bestimmten Anfangs oder Endes des Wertebereichs, der zuvor der Steuereinheit eingegeben wird.

Dabei kann der Sperrklinkenantrieb ein elektromagnetischer oder elektromotorischer oder ein piezoelektrischer Sperrklinkenantrieb sein.

Weist die Klinkenanordnung eine Freilaufkupplung auf, die in der Eingriffsposition der ersten Klinke in dem Zahnkranz bei Drehung des Drehknopfes im Uhrzeigersinn und der Eingriffsposition der zweiten Klinke in dem Zahnkranz bei Drehung des Drehknopfes gegen den Uhrzeigersinn geöffnet ist und ein Herausschwenken der ersten Klinke oder der zweiten Klinke aus dem Zahnkranz ermöglicht, so wird durch die in ihrer Eingriffsposition befindlichen Klinke zwar ein Weiterdrehen über den Wertebereich hinaus verhindert, ein Zurückdrehen in den Wertebereich hinein aber problemlos ermöglicht.

Ist dabei das Klinkenelement durch Öffnen der Freilaufkupplung von dem Sperrklinkenantrieb in die Neutralposition bewegbar, so wird auch ein Schleifen der Klinke auf den Zahnkranz sowie ein dadurch verursachter Verschleiß und störende Geräusche vermieden.

Vorzugsweise erstrecken sich die die Klinken zumindest annähern gleichlang von der Schwenkachse aus.

Zu einer sicheren Blockierung in der Eingriffsposition führt es, wenn die erste Klinke und/oder die zweite Klinke an ihrem freien Ende eine Klinkennocke aufweisen, deren Kontur zumindest annähernd der Kontur der Zahnlücken des Zahnkranzes entsprechen.

Zu einer guten Abstützung der Drehkräfte des Zahnkranzes an der Achse des Klinkenelements führt es, wenn die Klinken in ihrer Eingriffsposition mit ihrem freien Ende in Anlage an einer Zahnflanke eines Zahns des Zahnkranzes in Anlage sind.

Erstrecken sich dabei die Klinken in ihrer Eingriffsposition zumindest annähernd rechtwinklig zu der Zahnflanke, an der sie in Anlage sind, so wird auch ein selbsttätiges Herausbewegen der Klinken aus ihrer Eingriffsposition vermieden.

Ausführungsbeispiele der Erfindung sind in der Zeichnung dargestellt und werden im Folgenden näher beschrieben. Es zeigen
- Figur 1: eine perspektivische Seitenansicht eines ersten Ausführungsbeispiels eines Drehstellers,
- Figur 2: eine perspektivische Seitenansicht des Drehstellers nach Figur 1 im Teilschnitt,
- Figur 3: eine perspektivische Explosionsdarstellung des Drehstellers nach Figur 1 im Teilschnitt,
- Figur 4: eine weitere perspektivische Explosionsdarstellung des Drehstellers nach Figur 1 im Teilschnitt,
- Figur 5: eine perspektivische Obenansicht eines Ausschnitts eines zweiten Ausführungsbeispiels eines Drehstellers in einer ersten Stellposition,
- Figur 6: eine perspektivische Obenansicht eines Ausschnitts des Drehstellers nach Figur 5 in einer zweiten Stellposition,
- Figur 7: eine perspektivische Untenansicht des Drehstellers nach Figur 5 in einer zweiten Stellposition,
- Figur 8: eine perspektivische Untenansicht des Drehstellers nach Figur 5 in einer ersten Stellposition,
- Figur 9: eine perspektivische Ansicht eines Stellelements des Drehstellers nach Figur 5,
- Figur 10: eine weitere perspektivische Ansicht des Stellelements nach Figur 5,
- Figur 11: eine perspektivische Ansicht des Drehstellers nach Figur 1 mit einer Sperrklinke in Neutralposition,

- Figur 12: eine perspektivische Ansicht des Drehstellers nach Figur 11 mit der Sperrklinke in linker Sperrposition und
- Figur 13: eine perspektivische Ansicht des Drehstellers nach Figur 11 mit der Sperrklinke in rechter Sperrposition.

Die dargestellten Drehsteller besitzen ein manuell antreibbares Stellelement 1, das in einem Ring 2 drehbar gelagert ist.

Dabei besteht das Stellelement 1 aus einem Drehknopf 3 und einer koaxial damit fest verbundenen Hülse 4, die einen flanschartig radial nach außen hervorstehenden Zahnkranz 5 aufweist.

Auf der dem Drehknopf 3 axial entgegengesetzten Seite ist die Hülse 4 drehfest mit einem Sonnenrad 6 eines Planetengetriebes verbunden.

Gleichmäßig am Umfang verteilt greifen radial nach innen vier Planetenräder 7 in die Zähne des Sonnenrades 6 ein, die radial nach außen in Zähne eines mit dem Ring 2 verbundenen und die Planetenräder 7 umschließenden Hohlrades 8 eingreifen.

Die Planetenräder 7 sind axial an der einen Stirnseite eines ringförmigen Planetenträgers 9 auf Lagerzapfen 12 drehbar gelagert, an dessen den Planetenrädern 7 abgewandter Stirnseite ein Ringansatz 10 mit einer ersten radial umlaufenden Rastkontur 11 aus alternierenden Rasterhebungen und Rastvertiefungen angeordnet ist.

An seiner äußeren radial umlaufenden Ringkontur ist das Hohlrad 8 mit einer zweiten umlaufenden Rastkontur 13 aus Rasterhebungen und Rastvertiefungen versehen.

Radial zur ersten Rastkontur 11 ist in einer ersten Führungsbohrung 14 eines feststehenden Bauteils 18 ein zylindrischer erster Schieber 15 bewegbar geführt, an dessen der ersten Rastkontur 11 zugewandtem Ende eine erste Rastrolle 16 frei drehbar angeordnet ist.

Durch eine an einem Boden der ersten Führungsbohrung 14 mit ihrem einen Ende abgestützte vorgespannte erste Schraubendruckfeder 17 wird der erste Schieber 15 und mit ihm die erste Rastrolle 16 gegen die erste Rastkontur 13 beaufschlagt.

In gleicher Weise ist in einem weiteren feststehenden Bauteil 19 radial zur zweiten Rastkontur 13 eine zweite Führungsbohrung 20 ausgebildet, in der ein zweiter Schieber 21 bewegbar ist, an dessen der zweiten Rastkontur 13 zugewandtem Ende eine zweite Rastrolle 22 frei drehbar gelagert ist.

Durch ein an einem Boden der zweiten Führungsbohrung 20 mit ihrem einen Ende abgestützte vorgespannte zweite Schraubendruckfeder 23 wird der zweite Schieber 21 und mit ihm die zweite Rastrolle 22 gegen die zweite Rastkontur 13 beaufschlagt.

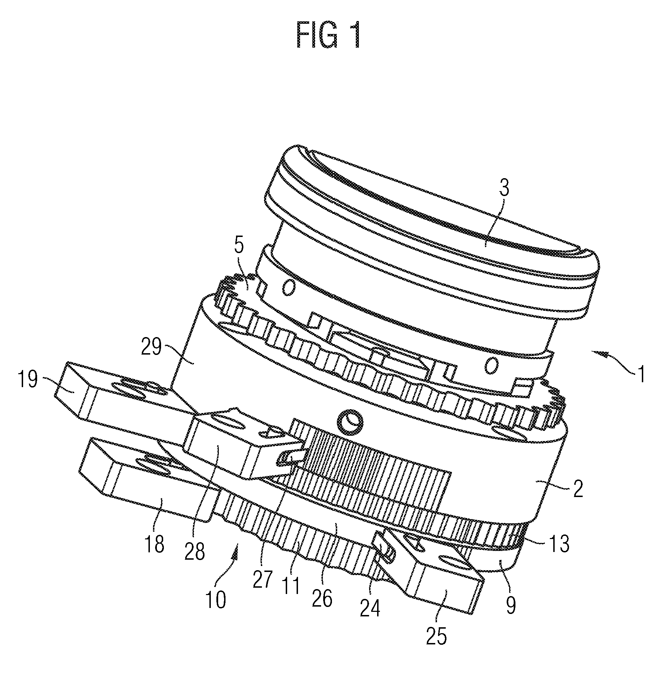

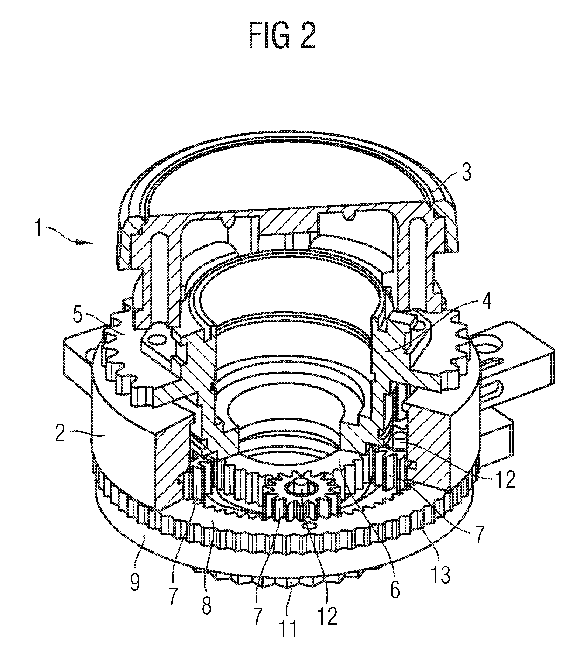

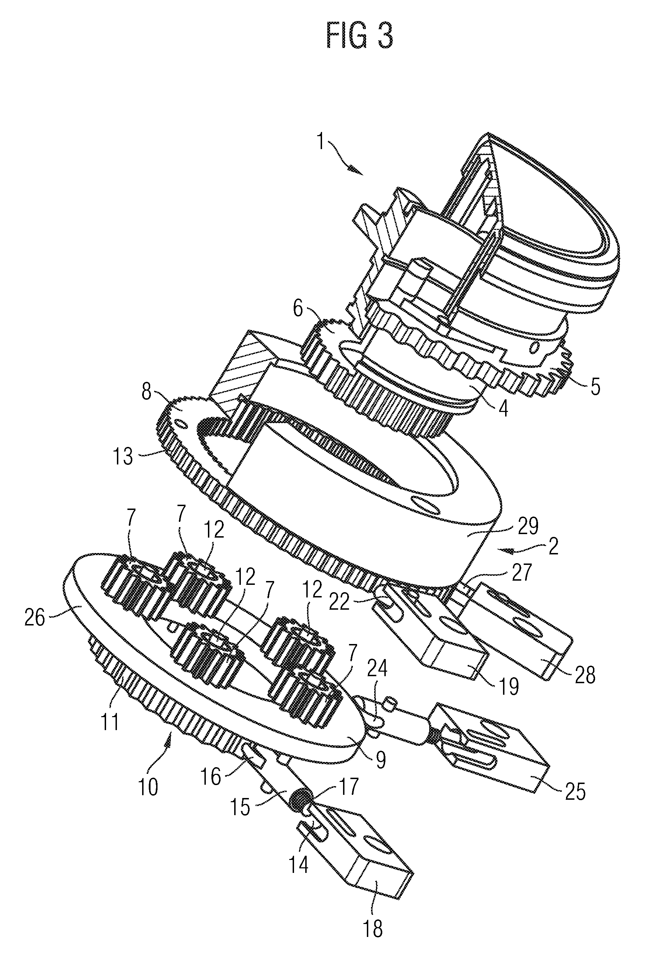

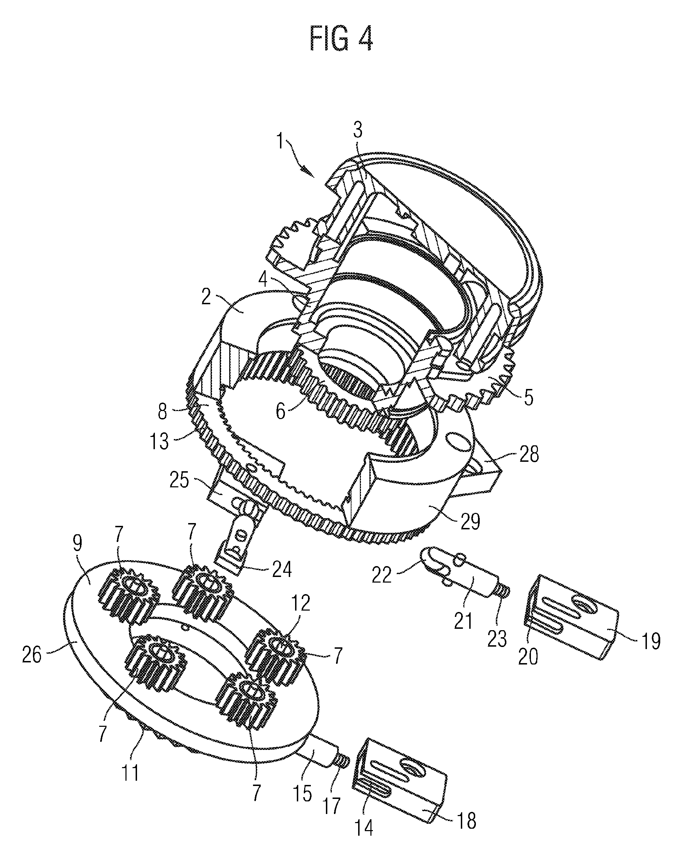

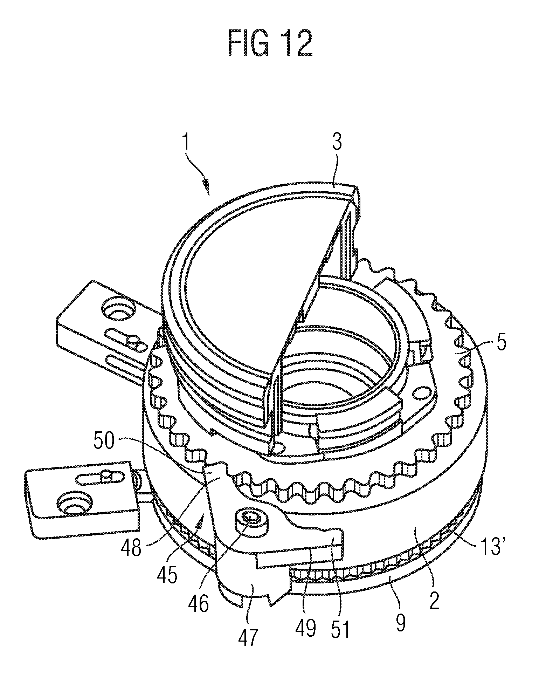

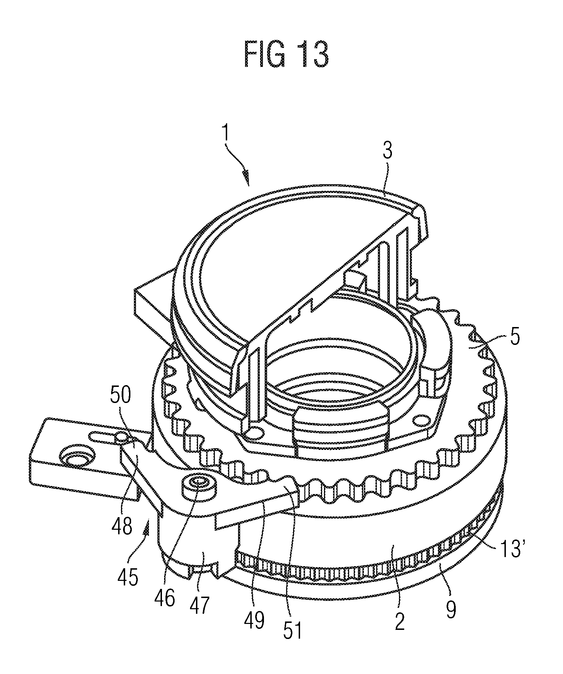

Bei dem Ausführungsbeispiel der Figuren 1 bis 4 und 11 bis 13 ist radial zum Planetenträger 9 bewegbar ein als Reibbelag ausgebildetes erstes Bremselement 24 in einem ersten Führungsgehäuse 25 angeordnet. Durch eine in dem ersten Führungsgehäuse 25 angeordnete erste Stelleinheit ist das erste Bremselement 24 zwischen einer von der eine erste Bremsfläche 26 bildenden, radial umlaufenden äußeren Ringfläche des Planetenträgers 9 abgehobenen Stellung und einer mit Vorspannung an der ersten Bremsfläche 26 anliegenden Blockierstellung bewegbar antreibbar.

In der Blockierstellung wird dadurch der Planetenträger 9 an einer Drehung gehindert.

In gleicher Weise ist radial zum Ring 2 bewegbar ein als Reibbelag ausgebildetes zweites Bremselement 27 in einem zweiten Führungsgehäuse 28 angeordnet. Durch eine in dem zweiten Führungsgehäuse 28 angeordnete zweite Stelleinheit ist das zweite Bremselement 27 zwischen einer von der eine zweite Bremsfläche 29 bildenden radial umlaufenden äußeren Ringfläche des Rings 2 abgehobenen Stellung und einer mit Vorspannung an der zweiten Bremsfläche 29 anliegenden Blockierstellung bewegbar antreibbar.

In der Blockierstellung wird mit dem Ring 2 auch das Hohlrad 8 an einer Drehung gehindert.

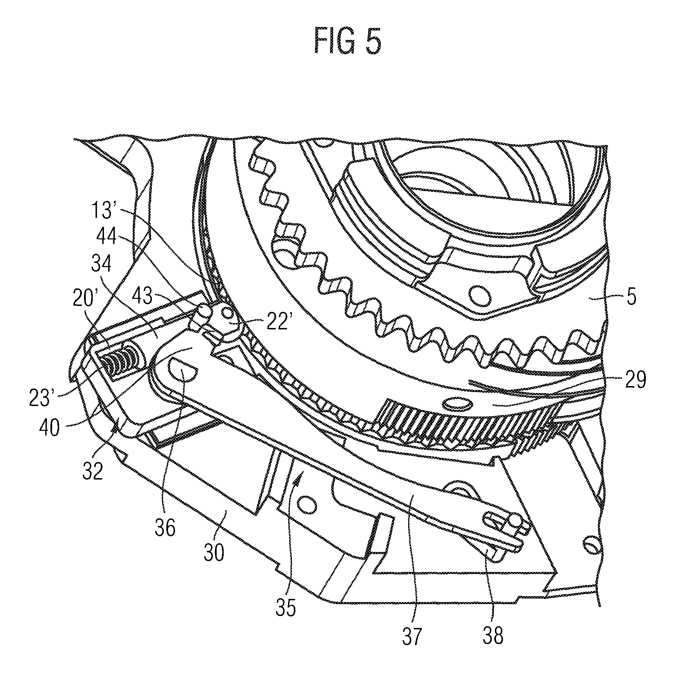

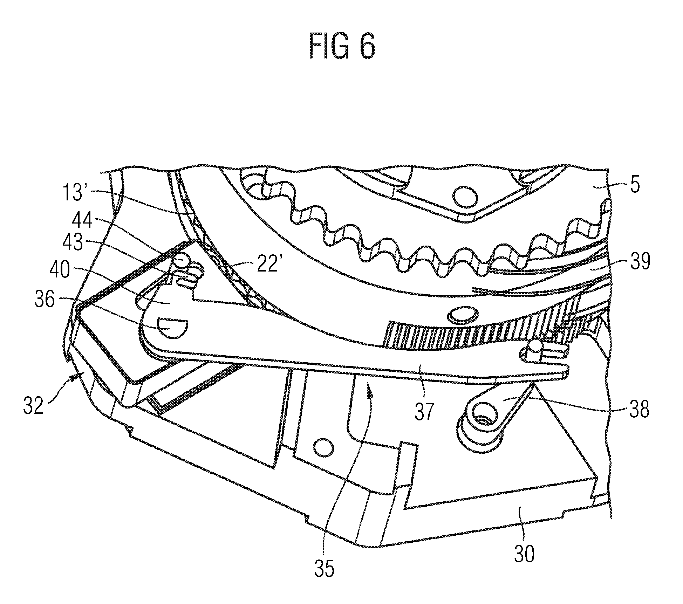

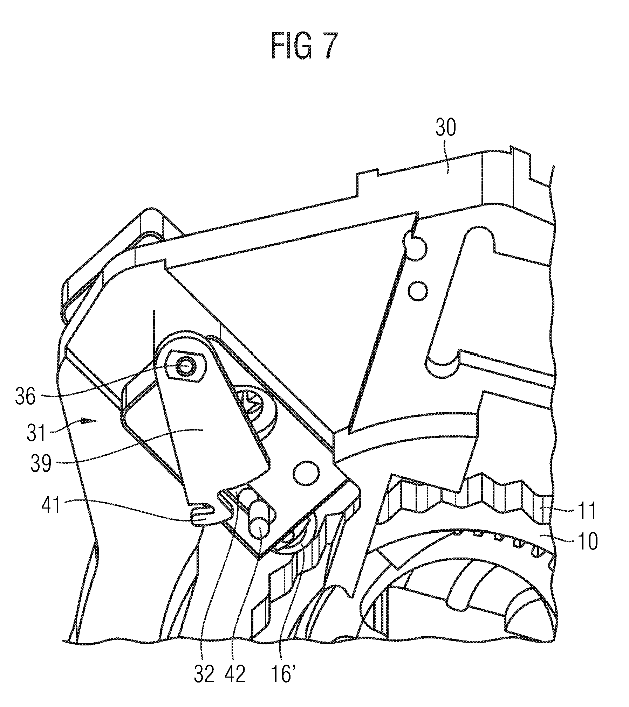

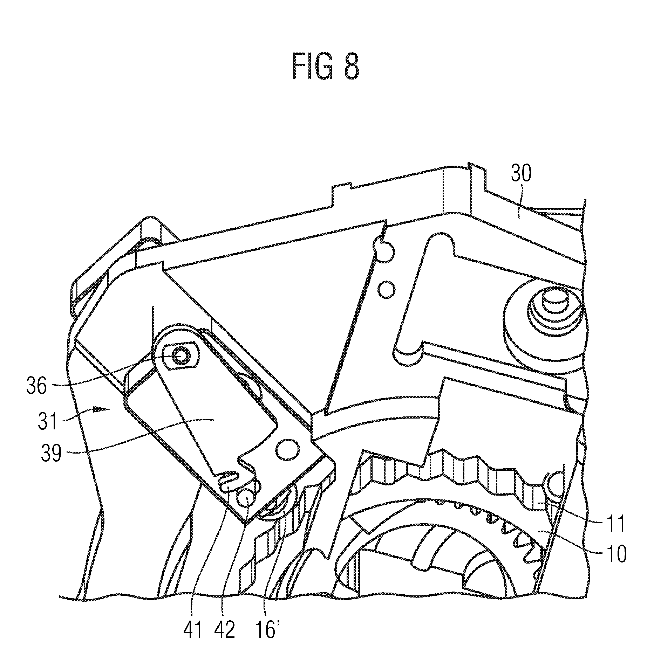

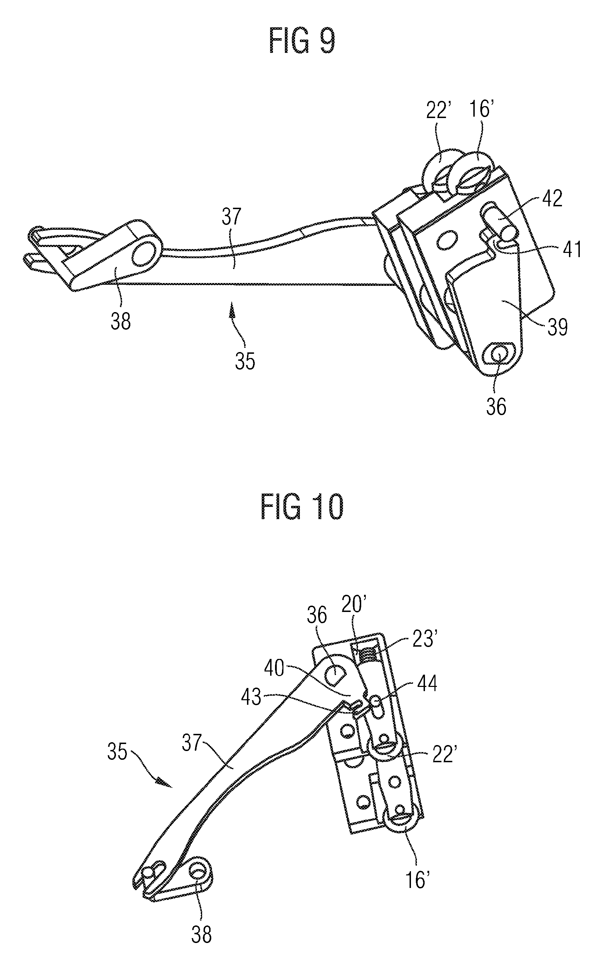

Bei dem Ausführungsbeispiel der Figuren 5 bis 10 ist an einem feststehenden Gehäuse 30 eine erste Führungseinheit 31 in der Ebene der ersten Rastkontur 11' und eine zweite Führungseinheit in der Ebene der zweiten Rastkontur 13' angeordnet.

Die erste Führungseinheit 31 weist eine radial zur ersten Rastkontur 11' gerichtete erste Führungsbohrung 14' auf, in der ein zylinderartiges erstes Rast-Blockierelement 33 verschiebbar angeordnet ist, das an seinem der ersten Rastkontur 11' zugewandten Ende eine erste Rastrolle 16' frei drehbar trägt.

Durch eine an einem Boden der ersten Führungsbohrung 14' mit ihrem einen Ende abgestützte vorgespannte erste Schraubendruckfeder 17' wird das erste Rad-Blockierelement 33 gegen die erste Rastkontur 13' beaufschlagt.

In gleicher Weise weist die zweite Führungseinheit 32 eine zur zweiten Rastkontur 13' gerichtete zweite Führungsbohrung 20' auf, in der ein zylinderartiges zweites Rast-Blockierelement 34 verschiebbar angeordnet ist, das an seinem der zweiten Rastkontur 13' zugewandten Ende eine zweite Rastrolle 22' frei drehbar trägt.

Durch eine an einem Boden der zweiten Führungsbohrung 20' mit ihrem einen Ende abgestützte, vorgespannte zweite Schraubendruckfeder 23' wird das zweite Rast-Blockierelement 34 gegen die zweite Rastkontur 13' beaufschlagt.

Ein Schwenkhebel 35 eines Stellelements ist zwischen einer ersten Stellposition und einer zweiten Stellposition um eine zur Drehachse des Drehknopfes 3 parallele Schwenkachse 36 schwenkbar. Dazu ist ein Betätigungsarm 37 des Schwenkhebels 35 von einem Stellelement 38 eines Aktuators beaufschlagbar.

Der Schwenkhebel 35 besitzt weiterhin einen ersten Blockierarm 39 und einen zweiten Blockierarm 40, wobei durch den ersten Blockierarm 39 in der ersten Stellposition des Schwenkhebels 36 eine erste Blockiernase 41 einen sich quer zur Bewegungsrichtung des ersten Rast-Blockierelements 33 erstreckender erster Zapfen 42 des ersten Rast-Blockierelements 33 hintergriffen ist.

Dadurch wird das erste Rast-Blockierelement 33 in seiner in eine Rastvertiefung der ersten Rastkontur 11' eingerasteten Stellung blockiert und der Planetenträger 7 an einer Drehung gehindert.

In dieser ersten Stellposition ist das zweite Rast-Blockierelement 34 entgegen der Kraft der zweiten Schraubendruckfeder 23' verschiebbar, so dass das Hohlrad 8 drehbar bleibt.

Durch den zweiten Blockierarm 40 wird in der zweiten Stellposition des Schwenkhebels 36 von einer zweiten Blockiernase 43 ein sich quer zur Bewegungsrichtung des zweiten Rast-Blockierelements 34 erstreckender zweiter Zapfen 44 des zweiten Rast-Blockierelements 34 hintergriffen, wodurch das zweite Rast-Blockierelement 34 in seiner in eine Rastvertiefung der zweiten Rastkontur 13' eingerasteten Stellung blockiert und das Hohlrad 8 an einer Drehung gehindert ist.

Bei jedem der Ausführungsbeispiele werden durch Verdrehen des Drehknopfes 3 über das Sonnenrad 6 die in ihrer Position feststehenden Planetenräder 7 drehend angetrieben und treiben wiederum das Hohlrad 8 an.

Dabei kommt es zu einem Rasten der ersten Rastrolle 16, 16' an den Rasterhebungen und Rastvertiefungen der ersten Rastkontur 11, 11' mit einer bestimmten ersten Rastcharakteristik, was von der Bedienperson haptisch erfasst und entsprechend zugeordnet werden kann.

Wird das Hohlrad 8 drehblockiert und der Drehknopf 3 gedreht, so werden über das Sonnenrad 6 die Planetenräder 7 entlang der Zahnung des Hohlrades 8 bewegt, was zu einer Drehung des Planetenträgers 9 führt.

Dabei kommt es zu einem Rasten der zweiten Rastrolle 22, 22' an den Rasterhebungen und Rastvertiefungen der zweiten Rastkontur 13, 13' mit einer von der ersten Rastcharakteristik deutlich unterschiedlichen zweiten Rastcharakteristik, die von der Bedienperson haptisch erfasst und entsprechend zugeordnet werden kann.

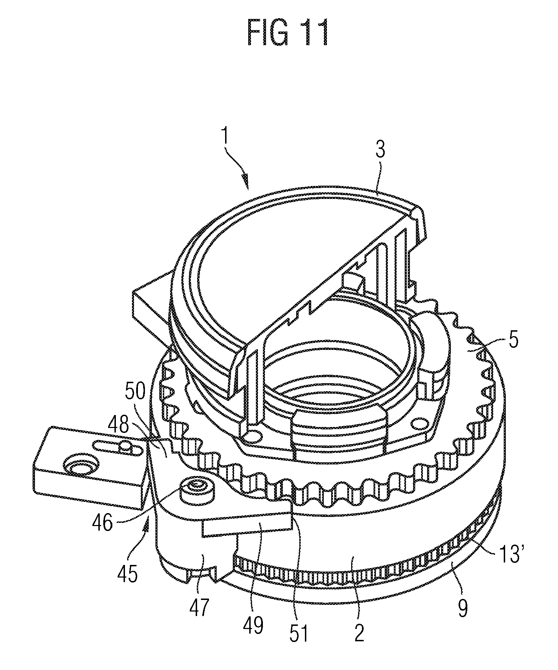

Wie in den Figuren 11 bis 13 dargestellt ist, ist in der Ebene des Zahnkranzes 5 ein zwei Klinken 48 und 49 aufweisendes Klinkenelement 45 um eine zur Drehachse des Drehknopfes 3 parallel Schwenkachse 46 von einem durch eine nicht dargestellte Steuereinheit ansteuerbaren Sperrklinkenantrieb 47 in drei verschiedene Positionen einstellbar.

Die beiden Klinken 48 und 49 erstrecken sich unter einem flachen Winkel etwa parallel zur Umfangskontur des Zahnkranzes 5 von der Achse 46 aus gegenläufig weg und besitzen an ihren freien Enden Klinkennocken 50 und 51, die in ihrer Kontur der Kontur der Zahnlücken des Zahnkranzes 5 entsprechen und in diese Zahnlücken eingreifen können.

In der in Figur 11 dargestellten Neutralposition des Klinkenelements 45 befinden sich beide Klinkennocken 50 und 51 außer Eingriff von dem Zahnkranz 5, so dass der Drehknopf 3 und mit ihm der Zahnkranz 5 frei in beide Drehrichtungen gedreht werden kann.

Wird der Sperrklinkenantrieb 4 zur Sperrung einer Drehung des Drehknopfes 3 entgegen dem Uhrzeigersinn angesteuert, so wird das Klinkenelement 45 mit seiner ersten Klinkennocke 50 in eine Zahnlücke des Zahnkranzes 5 eingreifend verschwenkt.

Damit liegt die erste Klinke 48 mit ihrer Stirnseite an einer Flanke der Zahnlücke an und blockiert eine Drehung des Zahnkranzes 5 entgegen dem Uhrzeigersinn.

Eine Drehung im Uhrzeigersinn ist aber möglich, da der Sperrklinkenantrieb 47 die Schwenkbewegung über eine Freilaufkupplung überträgt, die bei eingerasteter erster Klinkennocke 50 durch eine Drehung des Drehknopfes 3 im Uhrzeigersinn angesteuert wird.

Dadurch kann die erste Klinke 48 in Ausrastrichtung verschwenken.

Bei einer Ansteuerung des Sperrklinkenantriebs 47 zur Sperrung einer Drehung des Drehknopfes 3 im Uhrzeigersinn wird das Klinkenelement 45 mit seiner zweiten Klinkennocke 51 in eine Zahnlücke des Zahnkranzes 5 eingreifend verschwenkt.

Damit liegt die zweite Klinke 49 mit ihrer Stirnseite an einer Flanke der Zahnlücke an und blockiert eine Drehung des Zahnkranzes 5 im Uhrzeigersinn.

Auch hier ist eine Drehung entgegen dem Uhrzeigersinn möglich, da der Sperrklinkenantrieb 47 die Schwenkbewegung über die Freilaufkupplung überträgt, die bei eingerasteter zweiter Klinkennocke 51 durch eine Drehung des Drehknopfes 3 entgegen dem Uhrzeigersinn angesteuert wird, so dass die zweite Klinke 49 in Ausrastrichtung verschwenken kann.

Durch eine Ansteuerung des Sperrklinkenantriebs 47 und einem Einrasten der ersten Klinkennocke 50 oder der zweiten Klinkennocke 51 in den Zahnkranz 5 werden für bestimmte Drehpositionen des Drehknopfes 3 Endanschläge erzeugt, die entsprechend der Ansteuerung variabel sind.

Damit kann z.B. bei Erreichen einer bestimmten Position eines Auswahlmenüs des elektrischen oder elektronischen Geräts die Drehbewegung begrenzt werden.

## Patentansprüche

1. Drehsteller für elektrische oder elektronische Geräte in einem Kraftfahrzeug mit einem gegenüber feststehenden Gehäuseteilen manuell um eine Drehachse in und entgegen dem Uhrzeigersinn drehbar antreibbaren Drehknopf, durch den ein Rastkonturenelement mit einer alternierend Rasterhebungen und Rastvertiefungen aufweisenden Rastkontur drehbar antreibbar ist, in die ein Rastelement mit federnder Vorspannung eingreift, mit einem Zahnkranz, der koaxial drehfest mit dem Drehknopf verbunden ist und mit einer zwei Klinken aufweisenden, steuerbaren Klinkenanordnung, deren Klinken in die Zahnlücken des Zahnkranzes schwenkbar antreibbar sind, wobei durch die eine Klinke eine Drehung des Drehknopfes im Uhrzeigersinn und durch die zweite Klinke eine Drehung des Drehknopfes entgegen dem Uhrzeigersinn blockierbar ist, **dadurch gekennzeichnet, dass** ein die beiden Klinken (48, 49) aufweisendes Klinkenelement (45) um eine zur Drehachse des Drehknopfes (3) parallele Schwenkachse (46) schwenkbar antreibbar ist, wobei die Klinken (48, 49) von der Schwenkachse (46) ausgehend sich einander annähernd gegenläufig erstrecken und wobei das Klinkenelement (45) aus einer Neutralposition, in der beide Klinken (48, 49) außer Eingriff von dem Zahnkranz (5) sind, entgegen dem Uhrzeigersinn in eine Eingriffsposition der ersten Klinke (48) in den Zahnkranz (5) und im Uhrzeigersinn in eine Eingriffsposition der zweiten Klinke (49) in den Zahnkranz (5) schwenkbar ist.

2. Drehsteller nach Anspruch 1, **dadurch gekennzeichnet, dass** die Klinkenanordnung einen Sperrklinkenantrieb (47) zum Antrieb des Klinkenelements (45) aufweist, der von einer elektrischen oder elektronischen Steuereinheit ansteuerbar ist.

3. Drehsteller nach Anspruch 2, **dadurch gekennzeichnet , dass** der Sperrklinkenantrieb ein elektromagnetischer oder elektromotorischer oder ein piezoelektrischer Sperrklinkenantrieb ist.

4. Drehsteller nach einem der vorhergehenden Ansprüche, **dadurch gekennzeichnet, dass** die Klinkenanordnung eine Freilaufkupplung aufweist, die in der Eingriffsposition der ersten Klinke (48) in dem Zahnkranz (5) bei Drehung des Drehknopfes (3) im Uhrzeigersinn und in der Eingriffsposition der zweiten Klinke (49) in dem Zahnkranz (5) bei Drehung des Drehknopfes (3) gegen dem Uhrzeigersinn geöffnet ist und ein Herausschwenken der ersten Klinke (48) oder der zweiten Klinke (49) aus dem Zahnkranz (5) ermöglicht.

5. Drehsteller nach Anspruch 4, **dadurch gekennzeichnet, dass** das Klinkenelement durch Öffnen der Freilaufkupplung von dem Sperrklinkenantrieb (47) in die Neutralposition bewegbar ist.

6. Drehsteller nach einem der vorhergehenden Ansprüche, **dadurch gekennzeichnet, dass** sich die Klinken (48, 49) zumindest annähern gleichlang von der Schwenkachse (46) aus erstrecken.

7. Drehsteller nach einem der vorhergehenden Ansprüche, **dadurch gekennzeichnet, dass** die erste Klinke (48) und/oder die zweite Klinke (49) an ihrem freien Ende eine Klinkennocke (50, 51) aufweisen, deren Kontur zumindest annähernd der Kontur der Zahnlücken des Zahnkranzes (5) entsprechen.

8. Drehsteller nach einem der vorhergehenden Ansprüche, **dadurch gekennzeichnet, dass** die Klinken (48, 49) in ihrer Eingriffsposition mit ihrem freien Ende in Anlage an einer Zahnflanke eines Zahns des Zahnkranzes (5) in Anlage sind.

9. Drehsteller nach Anspruch 8, **dadurch gekennzeichnet, dass** die Klinken (48, 49) in ihrer Eingriffsposition sich zumindest annähernd rechtwinklig zu der Zahnflanke erstrecken, an der sie in Anlage sind.
